# EUROPEAN PATENT SPECIFICATION

(11) **EP 3 402 054 B1**
(45) Date of publication and mention of the grant of the patent: **03.03.2021**
(21) Application number: 17465522.5
(22) Date of filing: 10.05.2017
(51) Int. Cl.: H02K 5/24

(54) **ACTUATOR WITH MOTOR**
STELLGLIED MIT MOTOR
ACTIONNEUR À MOTEUR

(43) Date of publication of application: 14.11.2018
(73) Proprietor: Vitesco Technologies GmbH, 30165 Hannover (DE)
(72) Inventor: Maxim, Daniel Iosif, 300708 Timisoara (RO); Opre, Calin, 300576 Timisoara (RO); Albert, Eusebio-Marius, 300737 Timisoara (RO)

(56) References cited:
- EP-A2- 1 544 438
- US-A1- 2002 171 059

## Description

### Technical field

The invention relates to an actuator having a housing and having an electric motor, the electric motor being arranged in the housing and being braced with respect to the housing by means of a spring element, the motor having at least one axial continuation which engages into the spring element, the spring element being supported in the radial and in the axial direction with respect to the inner walls of the housing.

### Prior art

In addition to a pump stage for conveying the fluid, actuators, such as for example pumps and particularly fuel conveying pumps, have a drive motor which drives the pump stage directly or via a gearbox. The motor, which in particular is formed by an electric motor, is additionally inserted in a housing and fixed therein. Pumps are considered a special kind of actuators in general.

Document US 2002/171059 A1 discloses a throttle device comprising a throttle body and first and second supports for supporting a motor for controlling the opening position of a throttle valve. The first support and the second supports support the motor from both sides of the motor in the longitudinal direction. At least one of the first and second supports elastically supports the motor and may comprise, e.g., a metallic leaf spring disposed within the throttle body.

The disclosure of document EP 1 544 438 A2 relates to a support device for a motor received in a housing in which a plate-shaped resilient member is provided to enhance vibration-proofing performance of the motor. The motor is in connection with an antivibration spring which is constructed of a radial supporting portion and a thrust supporting portion that are integrally formed. The radial supporting portion resiliently holds a radially side face portion of the motor in the radial direction. The thrust supporting portion resiliently holds an axially end face portion of the motor in the axial direction.

The devices which have hitherto been used have springs which act between the motor and the housing and thus fix the motor. The springs known from the prior art are of annular design and have a corrugated structure, whereby they can in particular be used for providing support in the axial direction of the electric motor.

A disadvantage of the devices in the prior art is in particular that support in the radial direction is not provided, or is not provided to an adequate extent, and consequently the motor can perform relative movements in the radial direction which adversely impair the efficiency of the actuator.

Presentation of the invention, problem, solution, advantages

The problem of the present invention is therefore to provide an actuator which offers improved support of the electric motor in the axial and radial direction.

The problem concerning the actuator is solved by an actuator having the features of claim 1.

An exemplary embodiment of the invention relates to an actuator having a housing and having an electric motor, the electric motor being arranged in the housing and being braced with respect to the housing by means of a spring element, the motor having at least one axial continuation which engages into the spring element, the spring element being supported in the radial and in the axial direction with respect to the inner walls of the housing, the spring element being an annular element having a plurality of spring arms projecting radially inwardly from an encircling collar, a number of first spring arms providing support with respect to the motor in the radial direction and a number of second spring arms providing support with respect to the motor in the axial direction. The second spring arms are deflected upwardly in the axial direction from a common plane toward the motor and the first spring arms are arranged in the common plane.

A spring element having several spring arms, which allow support in the radial direction and in the axial direction, is advantageous since a secure mounting of the motor can be achieved in just one single component. Such a spring element can preferably be formed from a spring steel by means of punching and deep drawing.

It is particularly preferred for the spring element to be an annular element, this allowing it to be inserted into round, cylindrical housings with a round cross section in a particularly simple manner, said housings being used in particular with actuators having inserted electric motors.

By means of individual spring arms projecting from a common structure, support in different directions of action can be set up in one single component. The action can be adapted to the respective application purpose according to the form and arrangement of the spring arms.

It is furthermore advantageous that the second spring arms are deflected upwardly in the axial direction from a common plane toward the motor, and the first spring arms being arranged in the common plane. As a result of the upward deflection in particular, the available spring travel is increased relative to the installation height of the spring element. Moreover, this allows an additional preloading on the spring arms to be generated.

It is particularly preferred for the spring element to have on the outer circumference an encircling collar that projects in the axial direction. The collar projecting in the axial direction is advantageous in order, on the one hand, to increase the stability of the spring element and, on the other hand, to provide better support with respect to the housing into which the spring element is inserted.

As a result of the collar projecting in the axial direction, an enlarged contact surface is provided, whereby the transmission of force between the housing and the spring element is improved. The axially projecting collar is preferably formed so that it bears against the inner wall of the housing over as large an area as possible. In advantageous embodiments, the housing can have an encircling groove into which the spring element, possibly subjected to preloading, can be inserted. Also the spring element can be fixed between a bearing surface and a projection.

It is also advantageous if the spring arms have on their radially inwardly directed free ends a section that in the axial direction. Such a projecting section is advantageous in order to enlarge the contact surface on the motor, which is to be supported by the spring element. Moreover, due to a corresponding downward bending of the free end in the axial direction away from the motor, jamming can be avoided during the assembly, since the motor preferably slides into the centrally formed opening by means of the formed bending radii.

A preferred exemplary embodiment is characterized by the fact that the spring arms can be moved in the axial and/or radial direction independently of the spring arms that are respectively directly adjacent in the circumferential direction. Through independently movable spring arms, improved support of the motor can be achieved. In particular, a multiplicity of different load cases can be covered.

It is also preferred that the spring element has at least three first spring arms, which are distributed in the circumferential direction and are distanced from one another by second spring arms.

At least three first spring arms for providing support in the radial direction are advantageous since tilt-proof support can be achieved by means of at least three spring arms. The three first spring arms are preferably each arranged offset by 120 degrees with respect to one another in the circumferential direction, whereby support that is particularly stable can be achieved.

It is furthermore advantageous if the second spring arms are supported with respect to an axial outer surface of the motor and the first spring arms are supported with respect to a radial outer surface of the motor. This is advantageous in order to realize in a targeted manner the respective types of support via the respective spring arms.

It is also expedient if the spring element is arranged on an annular bearing surface in the housing, the encircling projecting collar supporting itself with respect to a radial inner surface of the housing. An annular bearing surface, such as for example a projection, is advantageous for achieving tilt-proof support of the spring element. In alternative configurations, it is also possible for several projections distributed in the circumferential direction on the inner wall of the housing to serve as a bearing surface.

It is furthermore advantageous if the spring arms project radially inwardly from the encircling collar, the spring arms leaving open a circular cutout in the spring element at the radial center, the cutout serving as a receptacle region for the axial continuation of the motor. Such a structure is advantageous in order to form a rotationally symmetrical spring element that can be inserted in a directionally independent manner with regard to the circumferential direction. The cutout provided radially at the center serves for accommodating the motor. Due to the formation of the free end regions of the spring arms, in particular the second spring arms, with end regions bent downward away from the motor, simplified assembly of the motor can be rendered possible. Furthermore, the risk of unwanted jamming of the motor with respect to the spring element during operation is avoided. The spring arms having bent down areas is an optional feature. The inventive effect can also be achieved by unbent spring arms.

It is furthermore expedient if the second spring arms are bent upwardly in a curved manner in the axial direction toward the motor. This increases the spring travel and allows improved support of the motor on the spring element.

Advantageous refinements of the present invention are described in the subclaims and in the following descriptions of figures.

### Brief description of the drawings

The invention is explained in more detail below on the basis of exemplary embodiments and with reference to the drawings, in which:
- Fig. 1: shows a cross section through a housing having a motor inserted therein, the motor being supported with respect to the housing by means of a spring element,
- Fig. 2: shows a perspective view of a spring element having a plurality of freely movable spring arms which form a receptacle for the motor, and
- Fig. 3: shows a section view of the spring element from Figure 2, the deflection of the spring arms from the common plane being noticeable.

### Preferred embodiment of the invention

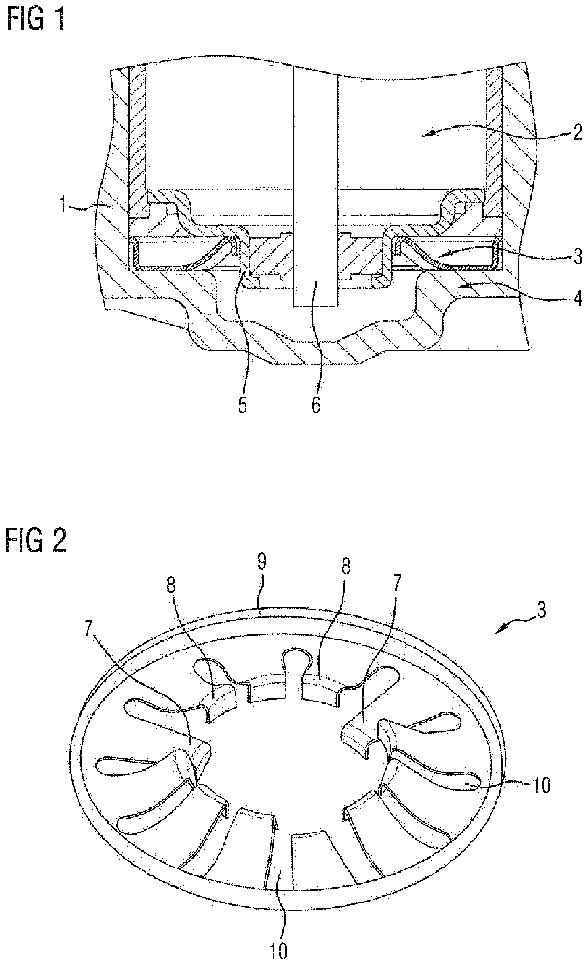

Figure 1 shows a sectional view through a housing 1 of an actuator, which can for example be a fuel pump. A motor 2 is arranged in the housing 1, which motor is supported with respect to the housing 1 by means of a spring element 3. The spring element 3 is arranged on a bearing surface 4 which is formed in the housing 1. Here the bearing surface 4 forms an annularly encircling projection onto which the spring element 3 is placed.

The motor 2 has an axial projection 5 which accommodates the internal mounting of the drive shaft 6 of the motor. With this axial projection 5, the motor 2 into the spring element 3 and bears against the spring arms 7, 8 for providing support in the radial direction with this projection 5. For the support in the axial direction, the motor 2 bears with an axial outer surface against the spring element 3.

Figure 2 shows a perspective view of the spring element 3, as has already been shown in Figure 1. The spring element 3 has a plurality of first spring arms 7 which serve for supporting the motor in the radial direction. Furthermore, the spring element 3 has a plurality of second spring arms 8 which serve for supporting the motor in the axial direction.

The spring element 3 has a collar 9 encircling in the circumferential direction and projecting in the axial direction, which collar serves for supporting the spring element 3 with respect to a radial inner surface of the housing. Furthermore, the spring element 3 can be supported by means of the collar 9 in the axial direction with respect to a projection or the housing of the motor.

In the exemplary embodiment of Figure 2, the spring element 3 has three first spring arms 7 and nine second spring arms 8. The first spring arms 7 are arranged circumferentially adjacent to one another, respectively at an angle of 120 degrees, while respectively three second spring arms 8 are arranged in between. The spring arms 7 and 8 are distributed equidistantly in the circumferential direction. The specific number of first and second spring arms can be varied between different embodiments. As long as a safe support of the motor is given there can be more or less spring arms used in the spring element.

The second spring arms 8 are deflected upwardly in a curved manner in the axial direction from the common plane with the first spring arms 7, whereby the spring travel is increased in the axial direction. The radially inwardly directed free ends of the spring arms 7, 8 are each bent downward in such a manner that, for the motor, stepless and edgeless guidance is provided. This, for one thing, facilitates the insertion of the motor and also prevents an occurrence of jamming of the motor at edges of the spring element 3. As mentioned earlier in the text, the bent down portions of the spring arms are one possible solution only and the invention is not limited to this configuration of the spring arms.

Furthermore, the sections of the spring arms 7, 8 that are bent downward additionally form contact surfaces for the housing of the motor, whereby improved guidance of the motor in the radial direction is achieved.

The spring arms 7, 8 are separated from one another by clearances 10 so that they are able to move independently of one another relative to the base formed by the collar 9. As a result, support that is particularly variable is achieved, which in particular is suitably adapted to the differing loads through the motor during operation.

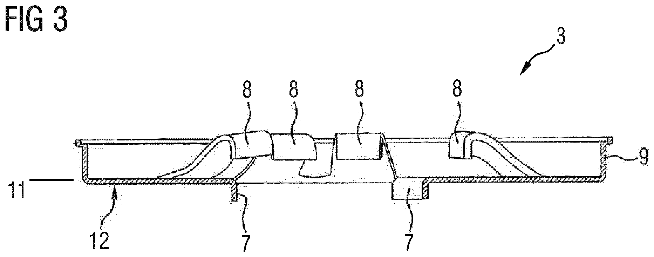

Figure 3 shows a section view of the spring element 3, as has already been shown in Figure 2. In the view of Figure 3, it is noticeable that the spring arms 8 are bent upwardly from the common plane 11 of the spring element 3. The spring arms 7 remain in the common plane 11, however, as does the annular intermediate region 12 between the spring arms 7, 8 and the axially turned-up collar 9.

The spring element 3 is particularly advantageously made from a spring steel and, for example, formed by means of punching and deep drawing.

The exemplary embodiments of Figures 1 to 3 have in particular no limiting nature and serve for illustrating the concept of the invention as defined in claim 1.

## Claims

1. An actuator having a housing (1) and having an electric motor (2), the electric motor (2) being arranged in the housing (1) and being braced with respect to the housing (1) by means of a spring element (3), the motor (2) having at least one axial continuation (5) which engages into the spring element (3), the spring element (3) being supported in the radial and in the axial direction with respect to the inner walls of the housing (1), wherein the spring element (3) is an annular element having a plurality of spring arms (7, 8) projecting radially inwardly from an encircling collar (9), a number of first spring arms (7) providing support with respect to the motor (2) in the radial direction and a number of second spring arms (8) providing support with respect to the motor (2) in the axial direction, **characterized in that** the second spring arms (8) are deflected upwardly in the axial direction from a common plane (11) toward the motor (2), the first spring arms (7) being arranged in the common plane (11).

2. The actuator as claimed in claim 1, wherein the spring element (3) has on the outer circumference an encircling collar (9) that projects in the axial direction.

3. The actuator as claimed in one of the previous claims, wherein the spring arms (7, 8) have on their radially inwardly directed free end a section that projects in the axial direction.

4. The actuator as claimed in one of the previous claims, wherein the spring arms (7, 8) can be moved in the axial and/or radial direction independently of the spring arms (7, 8) that are respectively directly adjacent in the circumferential direction.

5. The actuator as claimed in one of the previous claims, wherein the spring element (3) has at least three first spring arms (7), which are distributed in the circumferential direction and are distanced from one another by second spring arms (8).

6. The actuator as claimed in one of the previous claims, wherein the second spring arms (8) are supported with respect to an axial outer surface of the motor (2) and the first spring arms (7) are supported with respect to a radial outer surface of the motor (2).

7. The actuator as claimed in one of the previous claims, wherein the spring element (3) is arranged on an annular bearing surface (4) in the housing (1), the encircling projecting collar (9) supporting itself with respect to a radial inner surface of the housing (1).

8. The actuator as claimed in one of the previous claims, wherein the spring arms (7, 8) project radially inwardly from the encircling collar (9), the spring arms (7, 8) leaving open a circular cutout in the spring element (3) at the radial center, the cutout serving as a receptacle region for the axial continuation (5) of the motor (2).

9. The actuator as claimed in one of the previous claims, wherein the second spring arms (8) are bent upwardly in a curved manner in the axial direction toward the motor (2).

## Patentansprüche

1. Stellglied mit einem Gehäuse (1) und mit einem Elektromotor (2), wobei der Elektromotor (2) im Gehäuse (1) angeordnet ist und bezüglich des Gehäuses (1) mittels eines Federelements (3) verspannt ist, wobei der Motor (2) zumindest eine axiale Fortsetzung (5) hat, die in das Federelement (3) eingreift, wobei das Federelement (3) in der radialen und in der axialen Richtung bezüglich der Innenwände des Gehäuses (1) gestützt ist, wobei das Federelement (3) ein ringförmiges Element mit mehreren Federarmen (7, 8) ist, die radial einwärts aus einer umschließenden Einfassung (9) herausragen, wobei eine Anzahl von ersten Federarmen (7) Stütze bezüglich des Motors (2) in der radialen Richtung bereitstellt, und wobei eine Anzahl von zweiten Federarmen (8) Stütze bezüglich des Motors (2) in der axialen Richtung bereitstellt, **dadurch gekennzeichnet, dass** die zweiten Federarme (8) in der axialen Richtung aus einer gemeinsamen Ebene (11) nach oben in Richtung des Motors (2) durchgebogen werden, wobei die ersten Federarme (7) in der gemeinsamen Ebene (11) angeordnet sind.

2. Stellglied nach Anspruch 1, wobei das Federelement (3) am äußeren Umfang eine umschließende Einfassung (9) hat, die in der axialen Richtung vorspringt.

3. Stellglied nach einem der vorhergehenden Ansprüche, wobei die Federarme (7, 8) an ihrem radial einwärts gerichteten freien Ende einen Abschnitt haben, der in der axialen Richtung herausragt.

4. Stellglied nach einem der vorhergehenden Ansprüche, wobei die Federarme (7, 8) in der axialen und/oder radialen Richtung bewegt werden können, unabhängig von den Federarmen (7, 8), die jeweils in der umlaufenden Richtung direkt angrenzend sind.

5. Stellglied nach einem der vorhergehenden Ansprüche, wobei das Federelement (3) mindestens drei erste Federarme (7) hat, die in der umlaufenden Richtung verteilt sind und die voneinander durch zweite Federarme (8) beabstandet sind.

6. Stellglied nach einem der vorhergehenden Ansprüche, wobei die zweiten Federarme (8) bezüglich einer axialen äußeren Oberfläche des Motors (2) gestützt werden und wobei die ersten Federarme (7) bezüglich einer radialen äußeren Oberfläche des Motors (2) gestützt werden.

7. Stellglied nach einem der vorhergehenden Ansprüche, wobei das Federelement (3) auf einer ringförmigen Lageroberfläche (4) im Gehäuse (1) angeordnet ist, wobei die umschließende vorspringende Einfassung (9) sich bezüglich einer radialen inneren Oberfläche des Gehäuses (1) selbst stützt.

8. Stellglied nach einem der vorhergehenden Ansprüche, wobei die Federarme (7, 8) radial einwärts von der umschließenden Einfassung (9) herausragen, wobei die Federarme (7, 8) einen kreisförmigen Ausschnitt im Federelement (3) an der radialen Mitte offen lassen, wobei der Ausschnitt als eine Aufnahmeregion für die axiale Fortsetzung (5) des Motors (2) dient.

9. Stellglied nach einem der vorhergehenden Ansprüche, wobei die zweiten Federarme (8) in einer gekrümmten Weise in der axialen Richtung zum Motor (2) hin nach oben gebogen sind.

## Revendications

1. Actionneur comprenant un boîtier (1) et un moteur électrique (2), le moteur électrique (2) étant disposé dans le boîtier (1) et étant renforcé par rapport au boîtier (1) au moyen d'un élément ressort (3), le moteur (2) ayant au moins un prolongement axial (5) qui vient en prise dans l'élément ressort (3), l'élément ressort (3) étant soutenu dans la direction radiale et dans la direction axiale par rapport aux parois intérieures du boîtier (1), l'élément ressort (3) étant un élément annulaire ayant une pluralité de bras de ressort (7, 8) faisant saillie radialement vers l'intérieur à partir d'un collier périphérique (9), un certain nombre de premiers bras de ressort (7) fournissant un support par rapport au moteur (2) dans la direction radiale et un certain nombre de seconds bras de ressort (8) fournissant un support par rapport au moteur (2) dans la direction axiale, **caractérisé en ce que** les seconds bras de ressort (8) sont déviés vers le haut dans la direction axiale à partir d'un plan commun (11) vers le moteur (2), les premiers bras de ressort (7) étant disposés dans le plan commun (11).

2. Actionneur selon la revendication 1, l'élément ressort (3) ayant sur la circonférence extérieure un collier périphérique (9) qui fait saillie dans la direction axiale.

3. Actionneur selon l'une quelconque des revendications précédentes, les bras de ressort (7, 8) ayant sur leur extrémité libre dirigée radialement vers l'intérieur une section qui fait saillie dans la direction axiale.

4. Actionneur selon l'une quelconque des revendications précédentes, les bras de ressort (7, 8) pouvant être déplacés dans la direction axiale et/ou radiale indépendamment des bras de ressort (7, 8) qui sont respectivement directement adjacents dans la direction circonférentielle.

5. Actionneur selon l'une quelconque des revendications précédentes, l'élément ressort (3) ayant au moins trois premiers bras de ressort (7), qui sont répartis dans la direction circonférentielle et sont espacés les uns des autres par des seconds bras de ressort (8).

6. Actionneur selon l'une quelconque des revendications précédentes, les seconds bras de ressort (8) étant supportés par rapport à une surface extérieure axiale du moteur (2) et les premiers bras de ressort (7) étant supportés par rapport à une surface extérieure radiale du moteur (2).

7. Actionneur selon l'une quelconque des revendications précédentes, l'élément ressort (3) étant disposé sur une surface d'appui annulaire (4) dans le boîtier (1), le collier périphérique (9) en saillie s'appuyant par rapport à une surface intérieure radiale du boîtier (1).

8. Actionneur selon l'une quelconque des revendications précédentes, les bras de ressort (7, 8) faisant saillie radialement vers l'intérieur à partir du collier périphérique (9), les bras de ressort (7, 8) laissant ouverte une découpe circulaire dans l'élément ressort (3) au niveau du centre radial, la découpe servant de zone de réception pour le prolongement axial (5) du moteur (2).

9. Actionneur selon l'une quelconque des revendications précédentes, les seconds bras de ressort (8) étant courbés vers le haut de manière incurvée dans la direction axiale vers le moteur (2).
